# EUROPÄISCHE PATENTANMELDUNG

(11) **EP 1 843 057 A1**
(43) Veröffentlichungstag der Anmeldung: **10.10.2007**
(21) Anmeldenummer: 07005018.2
(22) Anmeldetag: 12.03.2007
(51) Int. Cl.: F16D 13/58, F16D 3/02, F16D 21/06

(54) **Drehmomentübertragungseinrichtung**

(30) Priorität: 08.04.2006 DE 102006016663
(71) Anmelder: LuK Lamellen und Kupplungsbau Beteiligungs KG, 77815 Bühl (DE)
(72) Erfinder: Reder, Reinhold, 76185 Karlsruhe (DE)

(57) **Zusammenfassung**

Die Erfindung betrifft eine Drehmomentübertragungseinrichtung im Antriebsstrang (1) eines Kraftfahrzeugs zur Drehmomentübertragung zwischen einer Antriebseinheit (3) mit einer antriebsseitig vormontierten Baueinheit, insbesondere einer Drehschwingungsdämpfungseinrichtung (8), und einem Getriebe (5) mit einer getriebeseitig vormontierten Baueinheit, insbesondere einer Kupplungseinrichtung (6), die durch eine axiale Steckverbindungseinrichtung drehfest mit einem Ausgangsteil (20) der antriebsseitig vormontierten Baueinheit verbunden ist.

Die Erfindung zeichnet sich dadurch aus, dass die Steckverbindungseinrichtung einen relativ flexiblen Formschlussbereich (24) aufweist, der formschlüssig mit einem relativ starren Formschlussbereich (21) verbunden ist.

## Beschreibung

Die Erfindung betrifft eine Drehmomentübertragungseinrichtung im Antriebsstrang eines Kraftfahrzeugs zur Drehmomentübertragung zwischen einer Antriebseinheit mit einer antriebsseitig vormontierten Baueinheit, insbesondere einer Drehschwingungsdämpfungseinrichtung, und einem Getriebe mit einer getriebeseitig vormontierten Baueinheit, insbesondere einer Kupplungseinrichtung, die durch eine axiale Steckverbindungseinrichtung drehfest mit einem Ausgangsteil der antriebsseitig vormontierten Baueinheit verbunden ist.

Aufgabe der Erfindung ist es, eine Drehmomentübertragungseinrichtung gemäß dem Oberbegriff des Anspruchs 1 im Hinblick auf die Lebensdauer zu optimieren.

Die Aufgabe ist bei einer Drehmomentübertragungseinrichtung gemäß dem Oberbegriff des Anspruchs 1 dadurch gelöst, dass die Steckverbindungseinrichtung einen relativ flexiblen Formschlussbereich aufweist, der formschlüssig mit einem relativ starren Formschlussbereich verbunden ist. Der Begriff flexibel hat vorzugsweise die Bedeutung von elastisch verformbar und/oder biegsam. Durch eine definierte Flexibilität des flexiblen Formschlussbereichs wird die Montage vereinfacht. Die im Folgenden verwendeten Begriffe radial, axial und Umfangsrichtung beziehen sich auf die Drehachse der Drehmomentübertragungseinrichtung.

Ein bevorzugtes Ausführungsbeispiel der Drehmomentübertragungseinrichtung ist dadurch gekennzeichnet, dass der relativ flexible Formschlussbereich gegen den relativ starren Formschlussbereich vorgespannt ist. Dadurch können im Betrieb der Drehmomentübertragungseinrichtung unerwünschte Geräusche vermieden werden.

Ein weiteres bevorzugtes Ausführungsbeispiel der Drehmomentübertragungseinrichtung ist dadurch gekennzeichnet, dass der relativ flexible Formschlussbereich in radialer Richtung flexibel ist. Dadurch wird ein reibungsbehafteter Formschluss geschaffen, durch den unerwünschte Klappergeräusche sicher unterdrückt werden können. Vorzugsweise ist der relativ flexible Formschlussbereich in radialer Richtung vorgespannt.

Ein weiteres bevorzugtes Ausführungsbeispiel der Drehmomentübertragungseinrichtung ist dadurch gekennzeichnet, dass der relativ flexible Formschlussbereich in Umfangsrichtung flexibel ist. Das hat den Vorteil, dass der relativ starre Formschlussbereich größere Toleranzen, insbesondere Lagetoleranzen, aufweisen kann, ohne dass die formschlüssige Verbindung der beiden Formschlussbereiche beeinträchtigt wird. Vorzugsweise ist der relativ flexible Formschlussbereich in Umfangsrichtung vorgespannt.

Ein weiteres bevorzugtes Ausführungsbeispiel der Drehmomentübertragungseinrichtung ist dadurch gekennzeichnet, dass der relativ flexible Formschlussbereich in axialer Richtung flexibel ist. Dadurch kann zum Beispiel ein fertigungsbedingtes Spiel in axialer Richtung ausgeglichen werden. Vorzugsweise ist der relativ flexible Formschlussbereich in axialer Richtung vorgespannt.

Ein weiteres bevorzugtes Ausführungsbeispiel der Drehmomentübertragungseinrichtung ist dadurch gekennzeichnet, dass die Steckverbindungseinrichtung zusätzlich zu dem relativ flexiblen Formschlussbereich einen zweiten relativ starren Formschlussbereich aufweist, der formschlüssig mit einem dritten relativ starren Formschlussbereich verbunden ist. Dadurch wird auf einfache Art und Weise ein zusätzlicher formschlüssiger Kraftübertragungsweg für größere Drehmomente geschaffen.

Ein weiteres bevorzugtes Ausführungsbeispiel der Drehmomentübertragungseinrichtung ist dadurch gekennzeichnet, dass der zweite relativ starre Formschlussbereich gegenüber dem dritten relativ starren Formschlussbereich ein größeres Spiel aufweist als der relativ flexible Formschlussbereich gegenüber dem ersten relativ starren Formschlussbereich. Dadurch wird erreicht, dass relativ große Drehmomente, zum Beispiel so genannte impacts, nur über die starren Formschlussbereiche übertragen werden. Dadurch wird eine Beschädigung des relativ flexiblen Formschlussbereichs verhindert, der seine Wirkung bei der Übertragung von relativ kleinen Drehmomenten entfaltet, wie sie im normalen Betrieb auftreten.

Ein weiteres bevorzugtes Ausführungsbeispiel der Drehmomentübertragungseinrichtung ist dadurch gekennzeichnet, dass der erste relativ starre Formschlussbereich antriebsseitig vormontiert ist. Der relativ starre Formschlussbereich ist vorzugsweise an dem Ausgangsteil der antriebsseitig vormontierten Baueinheit, insbesondere der Drehschwingungsdämpfungseinrichtung, ausgebildet.

Ein weiteres bevorzugtes Ausführungsbeispiel der Drehmomentübertragungseinrichtung ist dadurch gekennzeichnet, dass der relativ flexible Formschlussbereich eine Verzahnung mit Zahnköpfen umfasst, die relativ flexibel an einem Steckverbindungselement angebracht sind.

Bei dem Steckverbindungselement handelt es sich vorzugsweise um ein Stanzteil oder ein Stanz-Biegeteil aus Metallblech.

Ein weiteres bevorzugtes Ausführungsbeispiel der Drehmomentübertragungseinrichtung ist dadurch gekennzeichnet, dass von den Zahnköpfen Führungsarme abgewinkelt sind. Die Führungsarme stellen eine Einführhilfe bei der Montage dar.

Ein weiteres bevorzugtes Ausführungsbeispiel der Drehmomentübertragungseinrichtung ist dadurch gekennzeichnet, dass die Zahnköpfe über relativ flexible Verbindungsbereiche mit relativ starren Zahnfüßen verbunden sind, die an dem Steckverbindungselement angebracht sind und den zweiten relativ starren Formschlussbereich bilden. Vorzugsweise sind die Zahnköpfe über die relativ flexiblen Verbindungsbereiche einstückig mit den Zahnfüßen verbunden.

Ein weiteres bevorzugtes Ausführungsbeispiel der Drehmomentübertragungseinrichtung ist dadurch gekennzeichnet, dass der erste relativ starre Formschlussbereich eine Vielzahl von Durchgangslöchern in einem zweiten Steckverbindungselement umfasst. Die Durchgangslöcher haben vorzugsweise einen rechteckigen Querschnitt.

Ein weiteres bevorzugtes Ausführungsbeispiel der Drehmomentübertragungseinrichtung ist dadurch gekennzeichnet, dass der dritte relativ starre Formschlussbereich eine Vielzahl von Einprägungen in dem zweiten Steckverbindungselement umfasst. Vorzugsweise bilden die Einprägungen auf einer Seite des zweiten Steckverbindungselements Erhebungen.

Ein weiteres bevorzugtes Ausführungsbeispiel der Drehmomentübertragungseinrichtung ist dadurch gekennzeichnet, dass zwischen dem relativ flexiblen Formschlussbereich und dem relativ starren Formschlussbereich Gleitelemente angeordnet sind. Die Gleitelemente dienen zur Verschleiß- und Geräuschminimierung.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine erfindungsgemäße Drehmomentübertragungseinrichtung im Halbschnitt;
- Figur 2: eine Teilansicht der Drehmomentübertragungseinrichtung in Richtung eines Pfeils II in Figur 1;
- Figur 3: die Ansicht eines Schnitts entlang der Linie III-III in Figur 2;
- Figur 4: eine Teilansicht der Drehmomentübertragungseinrichtung in Richtung eines Pfeils IV in Figur 1 und
- Figur 5: eine ähnliche Schnittansicht wie in Figur 3 gemäß einem weiteren Ausführungsbeispiel.

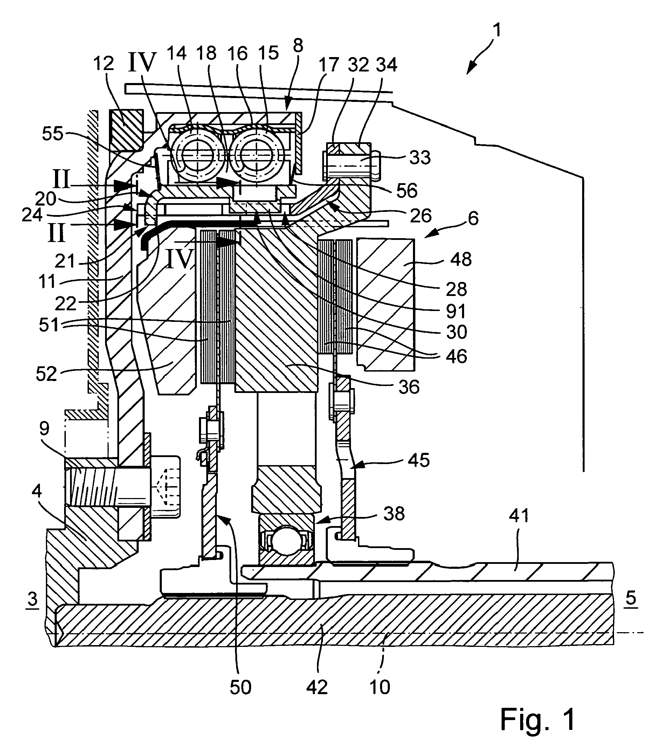

In Figur 1 ist ein Teil eines Antriebsstrangs 1 eines Kraftfahrzeugs dargestellt. Zwischen einer Antriebseinheit 3, insbesondere einer Brennkraftmaschine eines Kraftfahrzeugs, von der eine Kurbelwelle 4 ausgeht, und einem Getriebe 5 ist eine Doppelkupplung 6 angeordnet. Zwischen die Antriebseinheit 3 und die Doppelkupplung 6 ist eine Drehschwingungsdämpfungseinrichtung 8 geschaltet. Bei der Drehschwingungsdämpfungseinrichtung 8 handelt es sich um ein Zweimassenschwungrad.

Die Drehschwingungsdämpfungseinrichtung 8 umfasst ein Eingangsteil 11, das auch als Primärschwungmasse oder kurz Primärmasse bezeichnet wird. Die Primärschwungmasse 11 ist mit Hilfe von Schraubverbindungen 9 an die Kurbelwelle 4 vormontiert. Die Primärschwungmasse oder das Eingangsteil 11 der Drehschwingungsdämpfungseinrichtung 8 hat im Wesentlichen die Gestalt einer sich in radialer Richtung erstreckenden Kreisringscheibe, die radial außen einen in axialer Richtung zum Getriebe hin umgebogenen Randbereich aufweist, der einen Schwingungsdämpferkäfig bildet. An dem Eingangsteil 11 ist radial außen ein Anlasserzahnkranz 12 befestigt.

In dem Schwingungsdämpferkäfig des Eingangsteils 11 sind zwei Bogenfedern 14, 15 aufgenommen. Die beiden Bogenfedern 14, 15 erstrecken sich, bezogen auf eine Drehachse 10 der Kurbelwelle 4, in Umfangsrichtung und sind in axialer Richtung voneinander beabstandet. Zwischen den beiden Bogenfedern 14, 15 und dem Eingangsteil 11 ist eine Gleitschale 16 angeordnet, die eine deutlich höhere Härte als das Eingangsteil 11 aufweist und dazu dient, einen unerwünschten Verschleiß des Eingangsteils 11 durch die Bogenfedern 14, 15 zu verhindern. Der Schwingungsdämpferkäfig, in dem die Bogenfedern 14, 15 aufgenommen sind, wird durch einen Deckel 17 vervollständigt, der sich in radialer Richtung erstreckt.

Die Bogenfedern 14, 15 sind mit einem Anschlagelement 18 eines Ausgangsteils 20 der Drehschwingungsdämpfungseinrichtung 8 gekoppelt. Das Anschlagelement 18 wird auch als Anschlagfinger oder Flansch bezeichnet. Das Ausgangsteil 20 ist topfartig ausgebildet und wird daher auch als Flanschtopf bezeichnet. Der Flanschtopf 20 umfasst einen sich in axialer Richtung erstreckenden im Wesentlichen kreiszylindermantelförmigen Abschnitt mit einem umgebogenen Randbereich 22 auf der Antriebsseite. In oder an dem umgebogenen Randbereich 22 ist ein erster relativ starrer Formschlussbereich 21 ausgebildet. Der erste relativ starre Formschlussbereich 21 ist lösbar formschlüssig mit einem relativ flexiblen Formschlussbereich 24 verbunden, der am antriebsseitigen Ende eines axialen Abschnitts 25 eines Mitnehmerelements 26 ausgebildet ist.

In axialer Richtung zwischen dem relativ flexiblen Formschlussbereich 24 und dem getriebeseitigen Ende des axialen Abschnitts 25 des Mitnehmerelements 26 ist ein zweiter relativ starrer Formschlussbereich 28 ausgebildet, der formschlüssig mit einem dritten relativ starren Formschlussbereich 30 verbunden ist, der an dem Flanschtopf 20 ausgebildet ist. Auf der dem Getriebe zugewandten Seite weist das Mitnehmerelement 26 einen in radialer Richtung abgewinkelten Befestigungsabschnitt 32 auf, der mit Hilfe von Nietelementen 33 an einem Arm 34 der Doppelkupplung 6 befestigt ist. Der Arm 34 geht von einer zentralen Gegendruckplatte 36 der Doppelkupplung 6 aus.

Die zentrale Gegendruckplatte 36 wird auch als Zwischendruckplatte bezeichnet und ist mit Hilfe einer Lagereinrichtung 38 drehbar auf einer Getriebehohlwelle 41 gelagert. In der Getriebehohlwelle 41 ist eine Getriebevollwelle 42 drehbar angeordnet. Eine Kupplungsscheibe 45 ist drehfest mit der Getriebehohlwelle 41 verbunden. Die Kupplungsscheibe 45 ist mit Reibbelägen 46 ausgestattet, die in bekannter Art und Weise zwischen der Zwischendruckplatte 36 und einer Druckplatte 48 einklemmbar sind. Eine weitere Kupplungsscheibe 50 ist drehfest mit der Getriebevollwelle 42 verbunden. Die weitere Kupplungsscheibe 50 ist mit Reibbelägen 51 ausgestattet, die zwischen der Zwischendruckplatte 36 und einer weiteren Druckplatte 52 einklemmbar ist. Die erstgenannte Druckplatte 48 ist mit Hilfe einer (nicht dargestellten) Betätigungseinrichtung in axialer Richtung verlagerbar. Die weitere Druckplatte 52 ist über einen Zuganker 53 mit Hilfe einer weiteren Betätigungseinrichtung ebenfalls in axialer Richtung verlagerbar.

Das Ausgangsteil 20 ist in axialer Richtung zwischen zwei Tellerfedern 55, 56 eingespannt. Die Tellerfeder 55 ist antriebsseitig an einem Absatz des Eingangsteils 11 der Drehschwingungsdämpfungseinrichtung 8 abgestützt. Die Tellerfeder 56 ist getriebeseitig an dem Deckel 17 des Eingangsteils 11 der Drehschwingungsdämpfungseinrichtung 8 abgestützt.

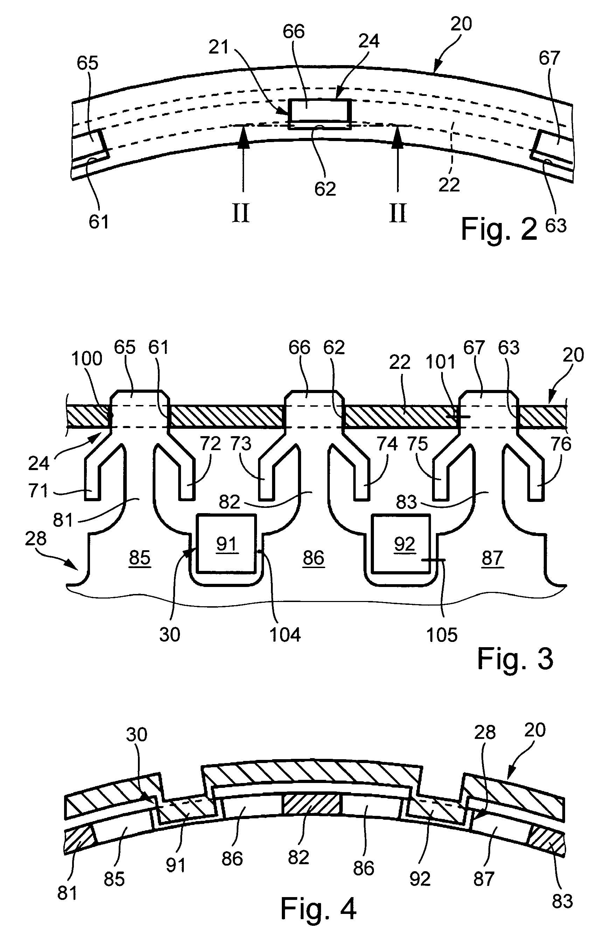

In der in Figur 2 dargestellten Teilansicht sieht man, dass der erste relativ starre Formschlussbereich 21 mehrere Durchgangslöcher 61 bis 63 umfasst, die gleichmäßig über den Umfang des umgebogenen Randbereichs 22 verteilt sind. In den Durchgangslöchern 61 bis 63 ist jeweils ein Zahnkopf 65 bis 67 formschlüssig aufgenommen. Die Zahnköpfe 65 bis 67 sind Teile des relativ flexiblen Formschlussbereichs 24.

In der in Figur 3 dargestellten Schnittansicht sieht man, dass von den Zahnköpfen 65 bis 67 jeweils zwei Führungsarme 71, 72; 73, 74; 75, 76 abgewinkelt sind. Die Führungsarme 71 bis 76 vereinfachen das Einführen des Mitnehmerelements 26 in den Flanschtopf 20 beim Herstellen der lösbaren Steckverbindung. Die Zahnköpfe 65 bis 67 sind jeweils über einen relativ flexiblen Verbindungssteg 81 bis 83 mit jeweils einem Zahnfuß 85 bis 87 verbunden. Die Zahnfüße 85 bis 87 bilden den zweiten starren Formschlussbereich 28. Die relativ flexiblen Verbindungsstege 81 bis 83 ermöglichen eine Bewegung der Zahnköpfe 65 bis 67 relativ zu den Zahnfüßen 85 bis 87, und zwar sowohl in radialer und in axialer Richtung als auch in Umfangsrichtung. In Umfangsrichtung zwischen zwei Zahnfüßen 85, 86; 86, 87 ist jeweils ein Formschlusselement 91, 92 angeordnet. Die Formschlusselemente 91, 92 bilden den dritten relativ starren Formschlussbereich 30.

In der in Figur 4 dargestellten Teilansicht sieht man, dass es sich bei den Formschlusselementen 91 und 92 um radial nach innen herausgeprägte Bereiche des Flanschtopfs 20 handelt, der auch als Ausgangsteil der Drehschwingungsdämpfungseihrichtung 8 bezeichnet wird.

In Figur 3 ist bei einem Punkt 100 angedeutet, dass zwischen den Zahnköpfen 65 bis 67 und den Durchgangslöchern 61 bis 63 in Umfangsrichtung nur ein geringes Spiel vorgesehen ist. Durch einen Strich 101 ist der Kraftfluss bei der Übertragung normaler Drehmomente, wie sie im normalen Betrieb des Antriebsmotors auftreten, angedeutet. Bei 104 sieht man, dass zwischen den Zahnfüßen 85 bis 87 und den Formschlusselementen 91, 92 ein relativ großes Spiel vorgesehen ist. Dadurch wird erreicht, dass die formschlüssige Verbindung zwischen den beiden relativ starren Formschlussbereichen 28 und 30 erst bei relativ großen Drehmomenten wirksam wird. Durch einen Strich 105 ist der Kraftfluss bei relativ großen Drehmomenten angedeutet.

Die Funktion der erfindungsgemäßen Drehmomentübertragungseinrichtung ist unabhängig von der Drehzahl, da die flexibel angebundenen Zahnköpfe bei hohen Drehzahlen durch den sie umgebenden, geschlossenen Flanschtopf 20 gehalten werden. Ein unerwünschter Verschleiß kann zum Beispiel durch Härten der Zahnköpfe 65 bis 67 und/oder der Zahnfüße 85 bis 87 sowie der Durchgangslöcher 61 bis 63 reduziert werden. Die im Betrieb auftretende Flächenpressung, die den Verschließ wesentlich beeinflusst, ist relativ niedrig, weil das zu übertragende Drehmoment über viele Zähne gleichmäßig verteilt wird.

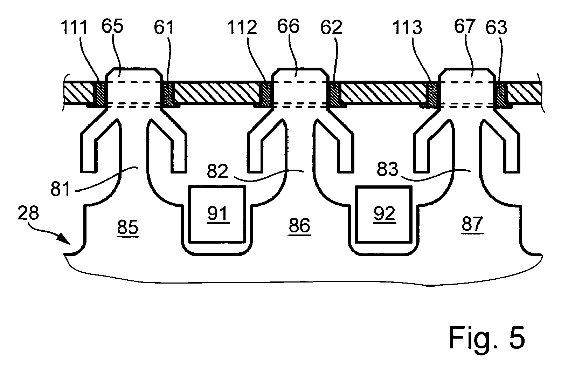

In Figur 5 ist dargestellt, dass zwischen den Zahnköpfen 65 bis 67 und den zugehörigen Durchgangslöchern 61 bis 63 Gleitelemente 111 bis 113 angeordnet sein können. Die Gleitelemente 111 bis 113 dienen zur Verschleiß- und Geräuschminimierung und sind vorzugsweise aus Kunststoff gebildet.

Eine gemäß der Erfindung ausgebildete Drehmomentübertragungsverbindung zwischen einer Antriebsmaschine und einem Antriebsstrang, insbesondere eines Kraftfahrzeuges, kann auch in vorteilhafter Weise im Drehmomentübertragungsweg zwischen dem Gehäuse eines Drehmomentwandlers und einer mit der Abtriebswelle der Antriebsmaschine, insbesondere Brennkraftmaschine, verbundenen Scheibe angeordnet werden.

### Bezugszeichenliste

- 1.: Antriebsstrang
- 3.: Antriebseinheit
- 4.: Kurbelwelle
- 5.: Getriebe
- 6.: Doppelkupplung
- 8.: Drehschwingungsdämpfungseinrichtung
- 9.: Schraubverbindung
- 10.: Drehachse
- 11.: Eingangsteil
- 12.: Anlasserzahnkranz
- 14.: Bogenfeder
- 15.: Bogenfeder
- 16.: Gleitschale
- 17.: Deckel
- 18.: Anschlagelement
- 20.: Ausgangsteil
- 21.: erster Formschlussbereich
- 22.: Randbereich
- 24.: Formschlussbereich
- 25.: axialer Abschnitt
- 26.: Mitnehmerbereich
- 28.: zweiter Formschlussbereich
- 30.: dritter Formschlussbereich
- 32.: Befestigungsabschnitt
- 33.: Nietelement
- 34.: Arm
- 36.: Gegendruckplatte
- 38.: Lagereinrichtung
- 41.: Getriebehohlwelle
- 42.: Getriebevollwelle
- 45.: Kupplungsscheibe
- 46.: Reibbeläge
- 48.: Druckplatte
- 50.: Kupplungsscheibe
- 51.: Reibbeläge
- 52.: Druckplatte
- 53.: Zuganker
- 55.: Tellerfeder
- 56.: Tellerfeder
- 61.: Durchgangsloch
- 62.: Durchgangsloch
- 63.: Durchgangsloch
- 65.: Zahnkopf
- 66.: Zahnkopf
- 67: Zahnkopf
- 71.: Führungsarm
- 72.: Führungsarm
- 73.: Führungsarm
- 74.: Führungsarm
- 75.: Führungsarm
- 76.: Führungsarm
- 81.: Verbindungssteg
- 82.: Verbindungssteg
- 83.: Verbindungssteg
- 85.: Zahnfuß
- 86.: Zahnfuß
- 87.: Zahnfuß
- 91.: Formschlusselement
- 92.: Formschlusselement
- 100.: Punkt
- 101.: Strich
- 104.: Punkt
- 105.: Strich
- 111.: Gleitelement
- 112.: Gleitelement
- 113.: Gleitelement

## Patentansprüche

1. Drehmomentübertragungseinrichtung im Antriebsstrang (1) eines Kraftfahrzeugs zur Drehmomentübertragung zwischen einer Antriebseinheit (3) mit einer antriebsseitig vormontierten Baueinheit, insbesondere einer Drehschwingungsdämpfungseinrichtung (8), und einem Getriebe (5) mit einer getriebeseitig vormontierten Baueinheit, insbesondere einer Kupplungseinrichtung (6), die durch eine axiale Steckverbindungseinrichtung drehfest mit einem Ausgangsteil (20) der antriebsseitig vormontierten Baueinheit verbunden ist, **dadurch gekennzeichnet, dass** die Steckverbindungseinrichtung einen relativ flexiblen Formschlussbereich (24) aufweist, der formschlüssig mit einem relativ starren Formschlussbereich (21) verbunden ist.

2. Drehmomentübertragungseinrichtung nach Anspruch 1, **dadurch gekennzeichnet, dass** der relativ flexible Formschlussbereich (24) gegen den relativ starren Formschlussbereich (21) vorgespannt ist.

3. Drehmomentübertragungseinrichtung nach einem der vorhergehenden Ansprüche, **dadurch gekennzeichnet, dass** der relativ flexible Formschlussbereich (24) in radialer Richtung flexibel ist.

4. Drehmomentübertragungseinrichtung nach einem der vorhergehenden Ansprüche, **dadurch gekennzeichnet, dass** der relativ flexible Formschlussbereich (24) in Umfangsrichtung flexibel ist.

5. Drehmomentübertragungseinrichtung nach einem der vorhergehenden Ansprüche, **dadurch gekennzeichnet, dass** der relativ flexible Formschlussbereich (24) in axialer Richtung flexibel ist.

6. Drehmomentübertragungseinrichtung nach einem der vorhergehenden Ansprüche, **dadurch gekennzeichnet, dass** die Steckverbindungseinrichtung zusätzlich zu dem relativ flexiblen Formschlussbereich (24) einen zweiten relativ starren Formschlussbereich (28) aufweist, der formschlüssig mit einem dritten relativ starren Formschlussbereich (30) verbunden ist.

7. Drehmomentübertragungseinrichtung nach Anspruch 6, **dadurch gekennzeichnet, dass** der zweite relativ starre Formschlussbereich (28) gegenüber dem dritten relativ starren Formschlussbereich (30) ein größeres Spiel aufweist als der relativ flexible Formschlussbereich (24) gegenüber dem ersten relativ starren Formschlussbereich (21).

8. Drehmomentübertragungseinrichtung nach einem der vorhergehenden Ansprüche, **dadurch gekennzeichnet, dass** der erste relativ starre Formschlussbereich (21) antriebsseitig vormontiert ist.

9. Drehmomentübertragungseinrichtung nach einem der vorhergehenden Ansprüche, **dadurch gekennzeichnet, dass** der relativ flexible Formschlussbereich (24) eine Verzahnung mit Zahnköpfen (65-67) umfasst, die relativ flexibel an einem Steckverbindungselement angebracht sind.

10. Drehmomentübertragungseinrichtung nach Anspruch 9, **dadurch gekennzeichnet, dass** von den Zahnköpfen (65-67) Führungsarme (71-76) abgewinkelt sind.

11. Drehmomentübertragungseinrichtung nach Anspruch 9 oder 10, **dadurch gekennzeichnet, dass** die Zahnköpfe (65-67) über relativ flexible Verbindungsbereiche (81-83) mit relativ starren Zahnfüßen (85-87) verbunden sind, die an dem Steckverbindungselement angebracht sind und den zweiten starren Formschlussbereich (28) bilden.

12. Drehmomentübertragungseinrichtung nach einem der vorhergehenden Ansprüche, **dadurch gekennzeichnet, dass** der erste relativ starre Formschlussbereich (21) eine Vielzahl von Durchgangslöchern (61-62) in einem zweiten Steckverbindungselement umfasst.

13. Drehmomentübertragungseinrichtung nach Anspruch 12, **dadurch gekennzeichnet, dass** der dritte relativ starre Formschlussbereich (30) eine Vielzahl von Einprägungen (91,92) in dem zweiten Steckverbindungselement umfasst.

14. Drehmomentübertragungseinrichtung nach einem der vorhergehenden Ansprüche, **dadurch gekennzeichnet, dass** zwischen dem relativ flexiblen Formschlussbereich (24) und dem relativ starren Formschlussbereich (21) Gleitelemente (111-113) angeordnet sind.
